# FASCICULE DE BREVET EUROPEEN

(11) **EP 1 525 385 B1**
(45) Date de publication et mention de la délivrance du brevet: **27.02.2008**
(21) Numéro de dépôt: 03755653.7
(22) Date de dépôt: 30.07.2003
(51) Int. Cl.: F02M 21/02, F02M 51/06

(54) **INJECTEUR POUR CARBURANT GAZEUX**
INJEKTOR FÜR GASFÖRMIGEN BRENNSTOFF
GASEOUS FUEL INJECTOR

(30) Priorité: 30.07.2002 FR 0209664
(43) Date de publication de la demande: 27.04.2005
(73) Titulaire: Valeo Systèmes de Contrôle Moteur, 95520 Osny (FR)
(72) Inventeur: LEROUX, Samuel, F-78300 Poissy (FR)
(74) Mandataire: Rolland, Jean-Christophe
(86) Numéro de dépôt international: PCT/FR2003/002419
(87) Numéro de publication internationale: WO 2004/013483

(56) Documents cités:
- WO-A-99/64773
- US-A- 5 325 838

## Description

La présente invention concerne un injecteur pour carburant gazeux utilisable notamment dans les moteurs thermiques mono ou bicarburation fonctionnant avec des gaz de pétrole liquéfiés (GPL) ou autre.

Dans cette application, l'injecteur sert à introduire le carburant gazeux avec un débit déterminé dans une chambre de combustion du moteur thermique.

### ARRIERE PLAN DE L'INVENTION

Un tel injecteur est décrit dans la demande de brevet WO9964773 et comprend généralement un corps pourvu d'un conduit d'amenée de carburant et d'un conduit d'évacuation du carburant hors de l'injecteur. Le conduit d'amenée et le conduit d'évacuation ont chacun une première extrémité débouchant à l'extérieur du corps pour être reliée respectivement au réservoir de carburant et à la chambre de combustion du moteur et une deuxième extrémité débouchant dans une chambre du corps dans laquelle sont montés un clapet et des moyens d'actionnement de ce clapet entre une position de fermeture dans laquelle le clapet est appliqué contre la deuxième extrémité du conduit d'évacuation et une position d'ouverture dans laquelle le clapet est écarté de la deuxième extrémité du conduit d'évacuation pour délimiter une section de passage. Cette section de passage est de forme cylindrique et a une surface égale au produit, d'une part, de la circonférence de la deuxième extrémité du conduit d'évacuation et, d'autre part, de la distance séparant la deuxième extrémité du conduit d'évacuation et le clapet en position d'ouverture. Cette distance correspond à la course du clapet. La section de passage ainsi définie détermine le débit de carburant évacué vers la chambre de combustion et doit donc être précise car elle influe sur les performances du moteur thermique.

Or, la course du clapet dépend des dimensions du clapet et de certains constituants des moyens d'actionnement ainsi que des jeux existant entre ces différents éléments. La précision de la course dépend donc de la qualité de l'usinage et du montage de ces éléments, ce qui rend la fabrication de l'injecteur délicate. En outre, les effets de la température, des chocs, des vibrations, ou plus généralement de l'usure provoquent des modifications (temporaires en ce qui concernent la température) des dimensions et des jeux définissant la course de sorte que la section de passage et donc également le débit d'évacuation ne sont pas constants dans le temps.

### OBJET DE L'INVENTION

Il serait donc intéressant de disposer d'un injecteur délivrant le carburant sans variation imprévue du débit.

### BREVE DESCRIPTION DE L'INVENTION

A cet effet, on prévoit, selon l'invention, un injecteur de carburant gazeux, comprenant un corps pourvu d'un conduit d'amenée de carburant et d'un conduit d'évacuation du carburant, le conduit d'amenée et le conduit d'évacuation débouchant dans une chambre du corps dans laquelle sont montés un clapet et des moyens d'actionnement du clapet entre une position de fermeture et une position d'ouverture dans laquelle le clapet délimite une section de passage du carburant, le conduit d'évacuation comprenant un tronçon calibré ayant une section inférieure à la section de passage définie par le clapet en position d'ouverture.

Ainsi, la section du tronçon calibré conditionne le débit d'évacuation indépendamment de la course du clapet.

D'autres caractéristiques et avantages de l'invention ressortiront à la lecture de la description qui suit d'un mode de réalisation particulier non limitatif de l'invention.

### BREVE DESCRIPTION DES DESSINS

Il sera fait référence aux dessins annexés, parmi lesquels :
- la figure 1 est une vue schématique en coupe d'un injecteur conforme à l'invention, le clapet étant dans sa position de fermeture,
- la figure 2 est une vue schématique partielle, agrandie et en coupe, de cet injecteur, le clapet étant dans sa position d'ouverture.

### DESCRIPTION DETAILLEE DE L'INVENTION

L'injecteur ici décrit est par exemple destiné à équiper un moteur thermique de véhicule automobile.

En référence aux figures, l'injecteur conforme à l'invention comprend un corps généralement désigné en 1, qui est ici réalisé en deux parties, à savoir un demi-corps supérieur 2 et un demi-corps inférieur 3 fixés l'un à l'autre.

Le demi-corps supérieur 2 et le demi-corps inférieur 3 délimitent entre eux une chambre généralement désignée en 4 dans laquelle débouchent un conduit d'amenée de carburant 5 et un conduit d'évacuation du carburant portant la référence générale 6.

Le conduit d'amenée du carburant 5 est ménagé dans le demi-corps inférieur 3 et possède une extrémité débouchant à l'extérieur du corps 1 pour être reliée au réservoir de carburant du véhicule automobile et une extrémité opposée débouchant dans la chambre 4.

Le conduit d'évacuation du carburant 6 est ménagé dans un embout 7 monté sur le demi-corps inférieur 3 de telle manière que le conduit d'évacuation du carburant 6 possède une extrémité débouchant à l'extérieur du corps 1 pour être raccordée à la chambre de combustion du moteur et une extrémité opposée qui débouche par une ouverture 8 dans la chambre 4.

Le conduit d'évacuation 6 comporte un tronçon tronconique 9 qui s'étend depuis l'ouverture 8 jusqu'à un tronçon calibré 10 en se rétrécissant vers ce dernier et un tronçon terminal 11 relié au tronçon calibré 10.

Le tronçon tronconique 9 possède un angle au sommet inférieur à 55° qui est ici de préférence sensiblement égal à 40°. Cette valeur permet de limiter les perturbations de débit dans ce tronçon.

Le tronçon calibré 10 présente une section qui est déterminée pour correspondre au débit d'évacuation que doit fournir l'injecteur. Le tronçon terminal 11 a une section au moins égale à celle du tronçon calibré 10.

Le conduit d'évacuation 6 est en outre agencé pour obtenir une vitesse d'écoulement sonique du carburant dans le tronçon calibré 10. De cette manière, on a un débit d'évacuation qui est sensiblement constant malgré des variations de la pression en aval du tronçon calibré 10.

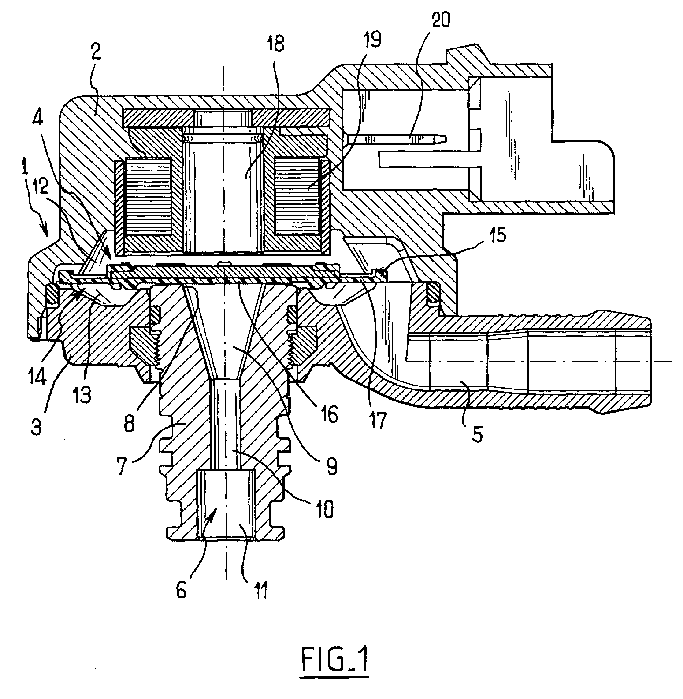

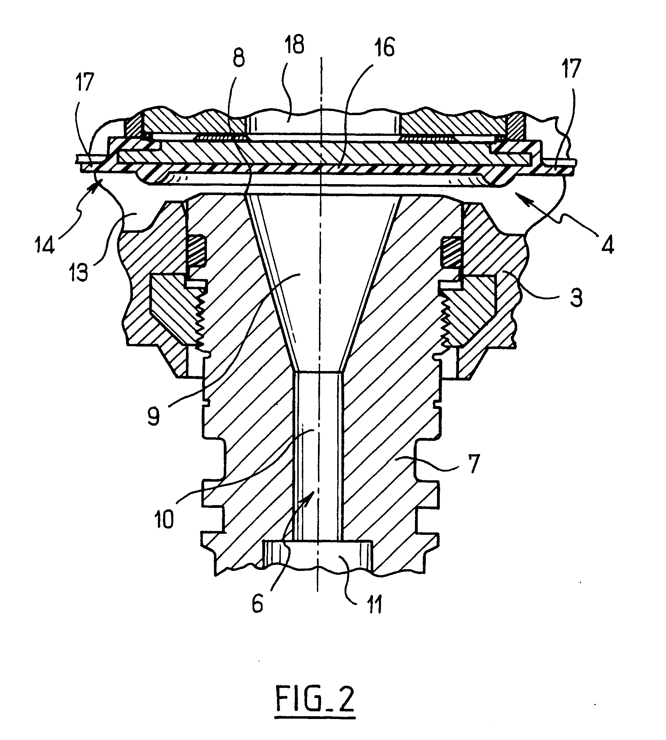

La chambre 4 est divisée en un compartiment supérieur 12 et un compartiment inférieur 13 (en considérant l'orientation de l'injecteur sur les figures) par une membrane 14 qui s'étend transversalement à l'axe du conduit d'évacuation 6 au niveau de l'ouverture 8. La membrane 14 comporte un bord périphérique 15 prisonnier entre le demi-corps supérieur 2 et le demi-corps inférieur 3, une partie centrale 16 s'étendant en regard de l'ouverture 8 pour former un clapet, et une portion intermédiaire 17 reliant le bord périphérique 15 à la partie centrale 16. La portion intermédiaire 17 est élastiquement déformable de telle manière que la partie centrale 16 de la membrane 14 est mobile entre une position de fermeture (voir figure 1) dans laquelle la partie centrale 16 est plaquée contre le bord de l'ouverture 8 et une position d'ouverture (voir figure 2) dans laquelle la partie centrale est écartée du bord de l'ouverture 8 et délimite avec celui-ci une section de passage cylindrique pour le carburant. La section de passage cylindrique a une surface égale au produit de la circonférence de l'ouverture 8 et de la distance séparant le bord de l'ouverture 8 et la partie centrale 16 de la membrane 14. La circonférence de l'ouverture 8 et la distance séparant le bord de l'ouverture 8 et la partie centrale 16 de la membrane 14 sont déterminés pour que la section de passage cylindrique soit supérieure à la section du tronçon calibré 10 de telle manière que le débit d'évacuation du carburant soit fixé par la section du tronçon calibré 10 et non par la section de passage cylindrique.

L'injecteur comprend des moyens d'actionnement de la partie centrale 16 de la membrane 14 entre la position d'ouverture et la position de fermeture. Ces moyens d'actionnement sont logés dans le compartiment supérieur 12 de la chambre 4 et comprennent un noyau 18 entouré d'une bobine 19 associée à des moyens de connexion 20 à une source d'alimentation électrique non représentée. On notera que pour améliorer le retour de la partie centrale 16 de la membrane 14 dans sa position de fermeture, une partie du carburant provenant du conduit d'amenée 5 est amenée dans le compartiment supérieur 12 pour y établir une contre-pression.

A titre indicatif, pour une ouverture 8 ayant un diamètre de 8 mm et une membrane dont la partie centrale 16 a une course de 0,3 mm, le tronçon calibré 10 a un diamètre de l'ordre de 2 mm.

En particulier, l'injecteur peut avoir une structure différente que celle décrite et, par exemple, le demi-corps inférieur 3 et l'embout 7 peuvent être réalisés en une seule pièce. Les moyens d'actionnement peuvent également être différents et incorporer par exemple des moyens mécaniques de rappel du clapet en position de fermeture tels qu'un ressort.

Par ailleurs, les valeurs numériques n'ont été mentionnées qu'à titre d'exemple.

## Revendications

1. Injecteur de carburant gazeux, comprenant un corps (1) pourvu d'un conduit d'amenée de carburant (5) et d'un conduit d'évacuation du carburant (6), le conduit d'amenée (5) et le conduit d'évacuation (6) débouchant dans une chambre (4) du corps (1) dans laquelle sont montés un clapet (16) et des moyens d'actionnement (18, 19) du clapet (16) entre une position de fermeture et une position d'ouverture dans laquelle le clapet (16) délimite une section de passage du carburant, **caractérisé en ce que** le conduit d'évacuation (6) comprend un tronçon calibré (10) ayant une section inférieure à la section de passage définie par le clapet (16) en position d'ouverture.

2. Injecteur selon la revendication 1, **caractérisé en ce que** le conduit d'évacuation (6) comporte un tronçon tronconique (9) qui s'étend depuis la chambre (4) jusqu'au tronçon calibré (10) en se rétrécissant vers ce dernier.

3. Injecteur selon la revendication 2, **caractérisé en ce que** le tronçon tronconique (9) a un angle au sommet inférieur à 55° environ.

4. Injecteur selon la revendication 1, **caractérisé en ce que** le conduit d'évacuation (6) est agencé pour obtenir une vitesse d'écoulement sonique du carburant dans le tronçon calibré (10).

## Claims

1. Gaseous fuel injector comprising a body (1) provided with a fuel supply duct (5) and a fuel discharge duct (6), the supply duct (5) and the discharge duct (6) opening into a chamber (4) of the body (1) in which chamber there are mounted a valve element (16) and actuating means (18, 19) for moving the valve element (16) between a closed position and an open position in which the valve element (16) delimits a fuel passage cross section, **characterized in that** the discharge duct (6) comprises a calibrated portion (10) of a cross section smaller than the passage cross section defined by the valve element (16) in the open position.

2. Injector according to Claim 1, **characterized in that** the discharge duct (6) comprises a frustoconical portion (9) which runs from the chamber (4) as far as the calibrated portion (10), narrowing towards the latter.

3. Injector according to Claim 2, **characterized in that** the frustoconical portion (9) has a cone angle of less than about 55°.

4. Injector according to Claim 1, **characterized in that** the discharge duct (6) is arranged in such a way as to obtain a sonic rate of flow of fuel through the calibrated portion (10).

## Patentansprüche

1. Injektor für gasförmigen Brennstoff, mit einem Körper (1), der mit einer Brennstoffzuführleitung (5) und einer Brennstoffabführleitung (6) versehen ist, wobei die Zuführleitung (5) und die Abführleitung (6) in einer Kammer (4) des Körpers (1) münden, in der ein Ventil (16) und Mittel (18, 19) zur Betätigung des Ventils (16) zwischen einer Schließstellung und einer Öffnungsstellung, in der das Ventil (16) einen Strömungsquerschnitt des Brennstoffs begrenzt, angeordnet sind, **dadurch gekennzeichnet, dass** die Abführleitung (6) einen kalibrierten Abschnitt (10) umfasst, dessen Querschnitt kleiner ist als der durch das Ventil (16) in der Öffnungsstellung definierte Strömungsquerschnitt.

2. Injektor nach Anspruch 1, **dadurch gekennzeichnet, dass** die Abführleitung (6) einen kegelstumpfförmigen Abschnitt (9) umfasst, der sich von der Kammer (4) bis zum kalibrierten Abschnitt (10) erstreckt und sich dabei zum Letzteren hin verjüngt.

3. Injektor nach Anspruch 2, **dadurch gekennzeichnet, dass** der kegelstumpfförmige Abschnitt (9) am Scheitel einen Winkel von weniger als ca. 55° aufweist.

4. Injektor nach Anspruch 1, **dadurch gekennzeichnet, dass** die Abführleitung (6) dazu angeordnet ist, eine Strömung des Brennstoffes mit Schallgeschwindigkeit im kalibrierten Abschnitt (10) zu erhalten.
